Europäisches Patentamt

European Patent Office

Office européen des brevets

(19)

(11) Numéro de publication: **0 224 237**
**B1**

## (12) FASCICULE DE BREVET EUROPEEN

(45) Date de publication du fascicule du brevet: **22.11.90**

(21) Numéro de dépôt: **86116312.9**

(22) Date de dépôt: **25.11.86**

(51) Int. Cl.⁵: **G 01 S 17/87,** G 01 S 17/74,
G 01 S 17/02

(54) **Système de localisation d'un objet muni d'au moins une mire passive.**

(30) Priorité: **27.11.85 FR 8517521**

(43) Date de publication de la demande:
**03.06.87 Bulletin 87/23**

(45) Mention de la délivrance du brevet:
**22.11.90 Bulletin 90/47**

(84) Etats contractants désignés:
**DE FR GB IT NL SE**

(56) Documents cités:
**EP-A-0 147 333**
**FR-A-2 186 658**
**FR-A-2 433 760**
**GB-A-2 143 395**
**US-A-3 705 955**

**PATENTS ABSTRACTS OF JAPAN, vol. 6, no.**
**192 (P-145)1070r, 30 septembre 1982; & JP-A-57**
**103 072**

(73) Titulaire: **ALCATEL ESPACE**
**11, avenue Dubonnet**
**F-92407 Courbevoie Cédex (FR)**

(72) Inventeur: **Hayard, Michel**
**3, Allée P. Feuga**
**F-31000 Toulouse (FR)**

(74) Mandataire: **Weinmiller, Jürgen et al**
**Lennéstrasse 9 Postfach 24**
**D-8133 Feldafing (DE)**

Courier Press, Leamington Spa, England.

**Description**

La présente invention se rapporte à un système de localisation d'un objet selon le préambule de la revendication 1 connu par exemple du document FR—A—2186658. Un tel système comprend un senseur de proximétrie: Un tel senseur permet de réaliser une mesure de position d'un objet sur lequel on a fixé un ou plusieurs repères passifs, par rapport à trois axes de référence, et ceci dans un volume donné.

Les senseurs de proximétrie s'emploient particulièrement dans l'espace c'est-à-dire en appesanteur, lors de manoeuvres d'accostage ou d'arrimage de deux véhicules spatiaux. Les mesures ainsi trouvées sont généralement:
Une mesure angulaire
Une mesure de distance
Une mesure de vitesse
Les précisions de ces mesures sont de l'ordre de:
$\pm 1°$ pour la mesure angulaire
$\pm 5$ mm pour la distance (à 1 m)
$< 10^{-2}$ m/s pour la vitesse
En début de phase d'approche, l'objet à repérer doit se trouver dans un certain volume défini par rapport aux axes de référence. Il existe plusieurs types de senseurs permettant d'arriver à ce résultat:

les senseurs optiques:

Ces senseurs peuvent être des imageurs ou télémètres:

Les imageurs mesurent l'angle sous lequel on voit le repère passif marqué sur l'objet à mesurer et sa variation. Ils sont très compliqués à construire à cause de la complexité des mires et aussi de la difficulté liée au traitement numérique des informations (analayses d'image). Ces imageurs semblent plus adaptés à réaliser une partie seulement des fonctions demandées.

Les télémètres sont basés sur le principe de la mesure d'une des caractéristiques d'un pinceau lumineux qui donne par déduction les mesures recherchées. Ces techniques sont au nombre de quatre:

Mesure du flux lumineux qui est réfléchi par la mire que porte l'objet à mesurer. Les inconvénients de cette méthode sont sa sensibilité aux éclairements parasites et le systètme ne sait pas faire de mesure absolue.

Mesure de fréquence de l'onde lumineuse réfléchie par la mire, basé sur l'effet Doppler. Les inconvénients de cette méthode sont la grande stabilité de fréquence qui est nécessaire, et le fait qu'on ne peut mesurer que des vitesses radiales.

Mesure du temps de transit d'une impulsion qui se réfléchi sur la cible portée par l'objet à mesurer. L'inconvénient majeur de cette technique est la grande complexité de l'électronique associée pour obtenir une bonne précision.

Mesure du déphasage d'une onde lumineuse modulée en intensité. Ces techniques ne donnent plus la précision requise à faible distance.

Les senseurs hyperfréquences:

Ces senseurs s'apparentent aux radars, systèmes anticollison, radars d'aéroport etc.... Il existe diverses techniques là aussi. Mais suivant celle qui est employée, on peut priviligier une mesure plutôt qu'une autre. Les inconvénients de ces systèmes hyperfréquences sont l'encombrement et la complexité de réalisation et la possibilité d'interférence H. F. avec d'autres équipment voisins; d'autre part leurs performances sont mauvaises à faible distance.

Pour pallier ces différents inconvénients, l'invention a pour objet un système de localisation d'un objet suivant la partie caractérisanté de la revendication 1.

L'invention présente le grand avantage d'utiliser des mires qui sont très faciles à réaliser, mais qui malgré tout comportent un grand nombre d'informations.

Avantageusement les mires comprennent chacune une série de lignes. Selon une forme préférée de réalisation de l'invention ces lignes, qui composent les mires, sont constituées de barres parallèles entre elles qui sont disposées sur une face plane de l'objet.

Ces mires ont aussi l'avantage d'être reconnues par lecture puis analyse, très facilement et simplement.

Le domaine de l'invention est celui de l'espace et des satellites, notamment des vols habités et autres dans lesquels il y a des manoeuvres de rendez-vous, d'accostage ou d'arrimage. Le senseur image utilisé dans ce but dans le dispositif de l'invention, notamment pour le repérage d'objet proches de l'ordre de quelques mètres, présente le grand avantage d'être considérablement simplifié.

Plus précisément l'invention concerne un système de localisation d'un objet muni de quatre mires passives le plus espacées possible les unes des autres, disposées sur deux axes perpendiculaires, dont les barres codées sont perpendiculaires à ces axes, le balayage lumineux de cet objet étant réalisé indifféremment par le balayage du faisceau lumineux émis par la source ou par celui de l'angle solide du récepteur.

Les caractéristiques et avantages de l'invention ressortiront d'ailleurs de la description qui va suivre, à titre d'exemple non limitatif, en référence aux figures annexées sur lesquelles

la figure 1 illustre un code à barres de l'art connu;

la figure 2 est une représentation schématique du système de localisation de l'invention;

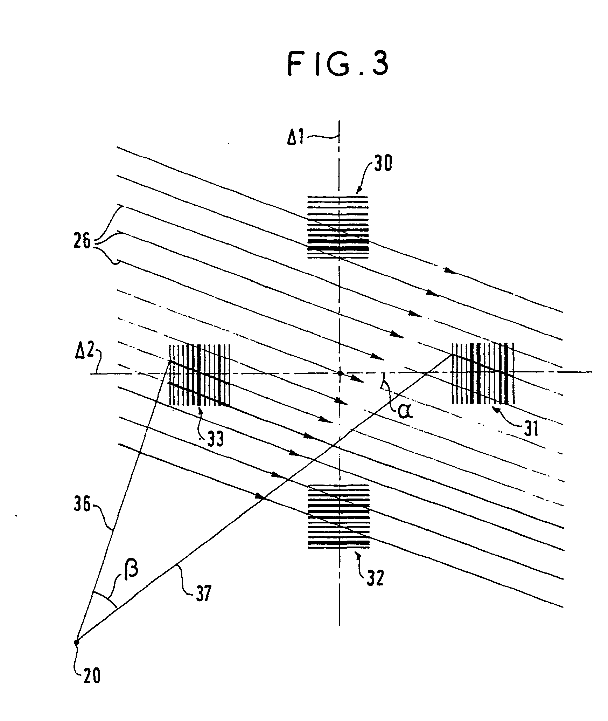

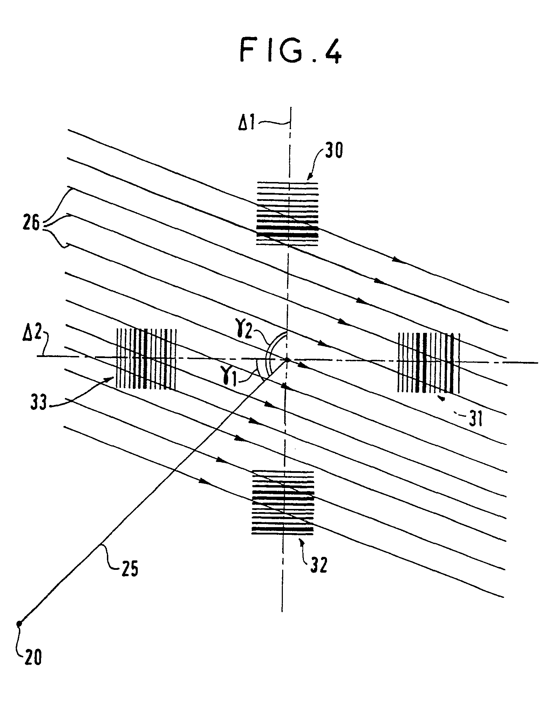

les figures 3 et 4 sont des vues explicatives du fonctionnement dudit système de localisation;

les figures 5, 6 et 7 illustrent plusieurs variantes de réalisation de ce système de localisation.

Dans le domaine de l'étiquetage de produits il existe un certain nombre de codes à barres forts différents les uns des autres.

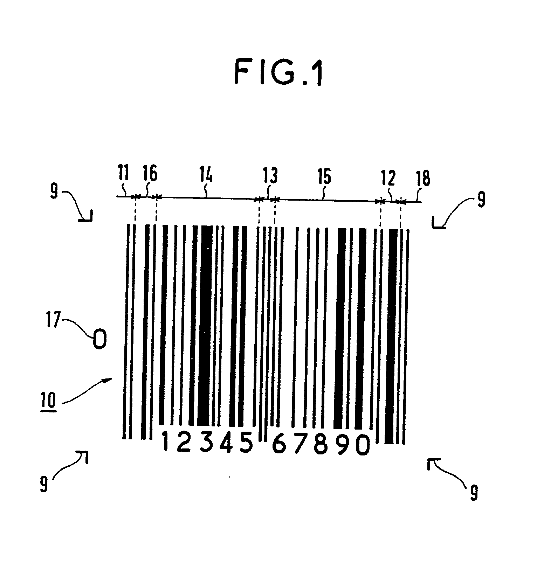

Le code 10 représenté à la figure 1, à titre d'exemple, comprend une succession de barres épaisses et de barres fines qui sont usuellement imprimées sur des produits en vente dans les supermarchés.

Ce code 10 est délimité par deux marques de garde extrêmes 11 et 12 sur les deux côtés du code et une marque de garde centrale 13. Ce code 10 représente douze digits: six d'entre eux 14 à la gauche de la marque de garde centrale 13 sont chacun représenté par un espace blanc, une barre noire, un second espace et une seconde barre. Les six autres 15, à la droite de la marque de garde centrale 13 sont chacun représenté par une barre, un espace, une barre, un espace. Cet arrangement permet à un lecteur optique de déterminer si le code 10 a été lu dans le bon sens et éventuellement d'inverser le signal lu. Les douze digits ont différentes significations. Le premier digit 16 décodé, qui apparait aussi sous forme directement lisible 17, à la gauche de la succession barres, est un nombre caractéristique du système. Un zéro par exemple correspond à un produit standard de supermarché. Les cinq digits suivants 14 (dans ce cas 12345) identifient le fabriquant du produit. Les cinq digits suivant 15 (67890) identifient le produit lui-même. Le dernier digit 18 qui n'apparait pas sous forme lisible directement, sert à confirmer que les onze autres digits codés ont été lus correctement. Les marques en coin 9 déterminant la zone qui doit rester vierge autour de cette succession de barres.

Les codes à barre et notamment celui représenté en figure 1, sont connus de l'homme de métier dans le domaine de la reconnaissance d'objets, mais ils n'ont jamais été utilisés dans le domaine de la localisation d'objets dans l'espace.

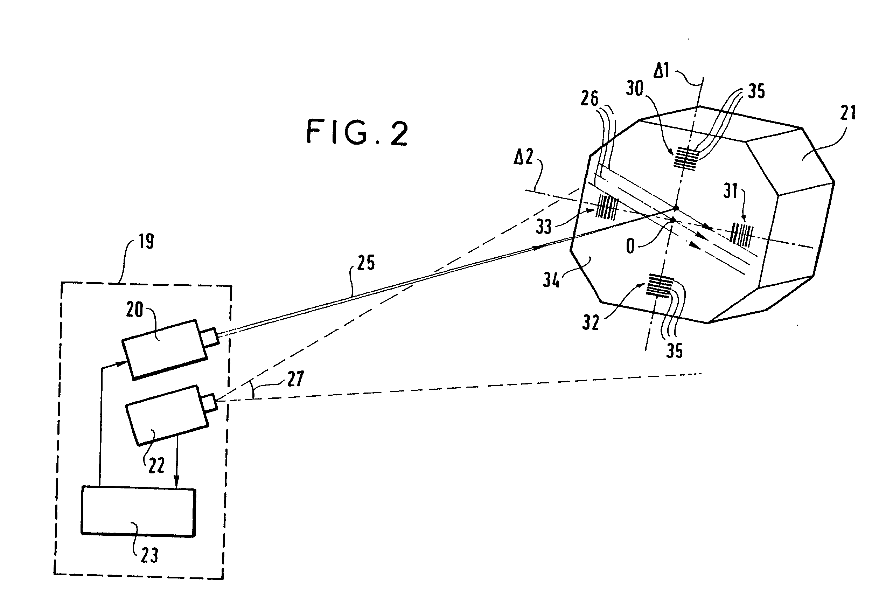

Le système de localisation de l'invention, représenté en figure 2 comporte d'une part un senseur de proximétrie 19 qui se compose notamment des différentes parties suivantes:

D'une source lumineuse 20 émettant de la lumière vers un objet 21 à repérer;

d'un récepteur 22 de lumière réfléchie par l'objet 21 à repérer;

d'un organe 23 de traitement de l'information et de différentes mires 30, 31, 32, 33 de barres codées disposées sur une face plane 23 de l'objet 21 à repérer. De façon à localiser l'objet à repérer selon trois dimensions, on peut envisager soit un balayage du pinceau lumineux 25 à l'émission ou un balayage à la réception de façon à rechercher un écho optique (réflexion) dans un volume important où l'objet 21 doit se trouver au départ.

C'est la première de ces deux solutions qui a été représentée à la figure 2. Ainsi en fonctionnement la source lumineuse 20 émet un pinceau lumineux 25 qui balaie 26 l'objet 21 à répérer et qui permet de lire, à l'aide du récepteur de lumière 22 ayant un certain angle solide 27 de réception qui englobe tout l'objet 21 et de l'organe 23 de traitement de l'information ainsi détectée, les informations codées sur les différentes mires disposées sur une face plane 34 de l'objet 21 pour permettre la localisation de celui-ci.

Le but d'un tel balayage 26 est donc de trouver les barres de codes par simple lecture et de les repérer dans l'espace par rapport à des axes de référence. Cette lecture de barres de code est beacoup plus facile qu'une analyse numérique de l'image.

Pour arriver à lire les barres de codes à partir de n'importe quelle position d'origine, il faut et il suffit que la longueur des barres qui composent les mires soit au moins égale à la longueur desdites mires. Avantageusement chaque mire 30, 31, 32, 33 est donc choisie de forme carrée.

Pour repérer les axes de l'objet 21 et son orientation, on dispose sur l'objet 21 quatre mires 30, 31, 32, 33 les plus éloignées possible les unes des autres. Chaque mire contient dans son code les informations de position par exemple: Nord—Sud—Est—Ouest, ainsi que d'autre identifications diverses telles que par exemple:

La référence de l'objet

La nature des points d'arrivage

Les distances entre mires (corrections de mesures automatiques)

Sur cette figure 2, les mires sont associées deux à deux 30, 32, et 31, 33 et sont disposées sur deux axes $\Delta 1$ et $\Delta 2$ perpendiculaires, symétriquement par rapport au point d'intersection 0 de ces axes $\Delta 1$ et $\Delta 2$; les axes des barres étant respectivement perpendiculaires aux directions de ces axes $\Delta 1$ et $\Delta 2$.

Pour connaître la position relative de l'objet 21 par rapport à l'ensemble source 20, récepteur 22 et organe de traitement 23, on effectue la comparaison entre les directions de deux ensembles d'axes de références solidaires l'un de l'objet, l'autre du senseur de proximétrie.

Le calcul des angles qui existent entre ces directions se fait de façon simple en connaissant les instants où la lecture d'une mire à barres codées s'est effectuée correctement. Différents paramètres peuvent être connus facilement notamment:

l'espacement entre lignes de balayage;

la distance entre deux mires repérées (ce paramètre peut-être indiqué dans le code à barres);

le temps passé entre deux lectures successives.

Sur les figuers 3 et 4 les codes des mires 30 et 32 ne sont jamais lu correctement (en entier). Le code de la mire 33 est lu deux fois. Le code de la mire 31 est lu une fois correctement, trois ou quatre lignes séparant deux codes lus en entier. On peut connaître le temps séparant le début des codes des mires 33 et 31. On déduit donc très facilement l'angle $\alpha$ formé entre l'axe $\Delta 2$ de l'objet et la direction du balayage qui peut-être parallèle, par exemple, avec l'un des axes de référence du senseur de proximétrie.

On déduit aussi l'angle $\beta$ vu de la source 20 entre les débuts des deux mires 33 et 31, et donc, si l'on connait la distance entre ces deux mires, qui peut-être donnée dans le code à barres, la distance entre la source 20 et l'objet 21.

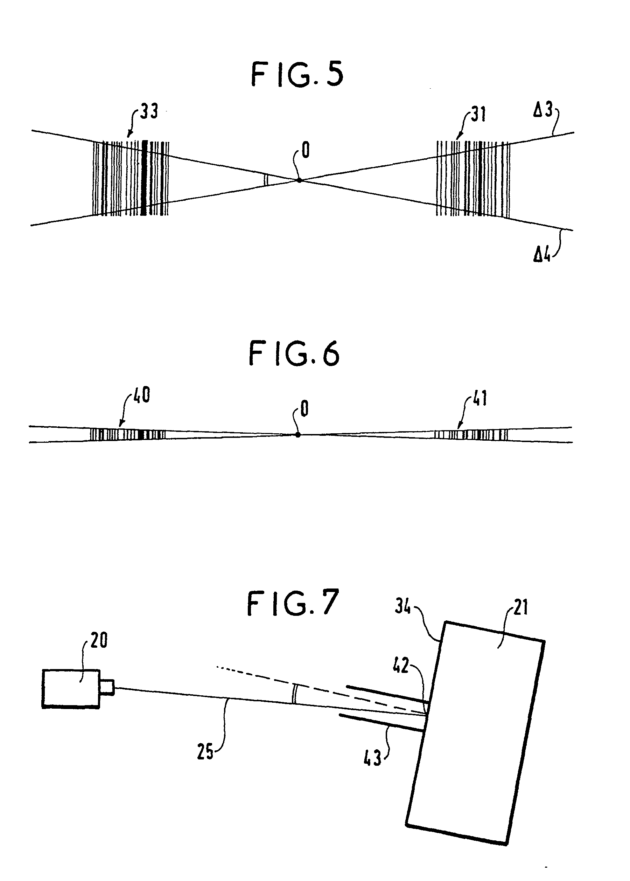

On peut également connaître l'angle $\gamma 1$ en mesurant la différence entre les cadences de lecture des mires 33 et 31. Pour connaître le positionnement de l'objet 21 dans l'espace et non plus seulement dans un plan on mesure un angle $\gamma^2$ en utilisant un balayage perpendiculaire au balayage 26 précédent qui permet de lire en totalité les deux autres mires 30 et 32. On peut prévoir un deuxième jeu de mires qui permet d'obtenir une plus grande précision de mesure, notamment lors de l'approche finale de l'objet lorsque celui-ci devient trop près du senseur pour utiliser le premier jeu de mires. Pour effectuer des différantes mesures angulaires, on peut aussi asservir l'orientation des axes de référence du senseur sur ceux de l'objet 21—On aligne alors la direction du premier ou du second balayage respectivement sur les directions des axes Δ1 et Δ2. Comme représenté à la figure 5, la direction du premier balayage 26 doit se trouver entre deux axes extrèmes Δ3 et Δ4 qui correspondant aux bords extrèmes des deux mires 33 et 31.

Pour obtenir une plus grande précision de mesure, on peut utiliser un deuxième jeu de mires 40, 41. Ce deuxième jeu de mires 40, 41 peut-être un jeu de mires ayant des barres moins longues, on peut alors asservir l'orientation des axes de référence du senseur, comme représenté à la figure 6. On peut également imaginer d'obtenir les angles avec plus de précision en disposant une mire 42 au fond d'un puits 43, par exemple au croisement des axes Δ1 et Δ2 portant les mires principales 30, 31, 32, 33.

Il est bien entendu que la présente invention n'a été décrite et représentée qu'à titre d'exemple préférentiel et que l'on pourra remplacer ses éléments constitutifs par des éléments équivalents sans pour autant sortir du cadre de l'invention.

Ainsi notamment l'objet 21 peut être muni de plus de quatre mires par exemple six disposées sur trois axes Δi à 60° les uns des autres et qui se coupent en un même point 0.

La surface sur laquelle sont disposées des mires 30, 31, 32, et 33 n'est pas nécessairement une face plane de l'objet, ce peut être notamment plusieurs parties différentes de cet objet, ou une face de cet objet qui a une forme quelconque. Les mires peuvent être notamment dans ce dernier cas, formées de signes allongées par exemple de forme trapézoïdale qui ne sont plus des barres parallèles.

Le deuxième jeu de mires peut lui aussi comporter quatre mires disposées sur les axes Δ1 et Δ2 mais plus rapprochées du point d'intersection 0 de ces axes Δ1 et Δ2 que les mires principales.

**Revendications**

1. Système de localisation d'un objet suivant trois dimensions, ledit système comprenant:
   un senseur de proximétrie (19) agencé pour effectuer un balayage lumineux de l'objet, et comportant une source d'émission de lumière (20) en direction de l'objet, un récepteur (22) de la lumière réfléchie par cet objet, et un organe de traitement (23) relié à ladite source de lumière (20) et audit récepteur (22), et
   plusieurs mires passives (30, 31, 32, 33) disposées sur une face dudit objet,
   système caractérisé en ce qu'il comporte aux moins quatre mires (30, 31, 32, 33) disposées deux par deux respectivement sur des axes (Δi) inclinés les uns par rapport aux autres et passant par un même point (O), en ce que chacune des mires comprend une série de signes allongés (35) lisibles optiquement et agencés entre eux pour former un code, et en ce que ledit senseur de proximétrie (19) est agencé pour recevoir la lumière réfléchie par les mires et pour mesurer le temps et l'angle vu du senseur entre les débuts de lecture de deux des mires par le faisceau de balayage pour localiser l'objet par rapport au senseur de proximétrie.

2. Système de localisation selon la revendication 1, caractérisé en ce que les mires passives (30, 31, 32, 33) sont situées sur une face plane (34) de cet objet (21).

3. Système de localisation selon la revendication 1 ou 2, caractérisé en ce que chaque mire passive (30, 31, 32, 33) comprend une série de lignes.

4. Système de localisation selon la revendication 3, caractérisé en ce que chaque mire passive (30, 31, 32, 33) comprend une série de barres parallèles (35).

5. Système de localisation selon la revendication 4, caractérisé en ce que les barres codées (35) qui composent les mires (30, 31, 32, 33) sont respectivement perpendiculaires aux axes (Δi) qui passent par ces mires (30, 31, 32, 33).

6. Système de localisation selon l'une quelconque des revendications précédentes, caractérisé en ce que les mires (30, 31, 32, 33) sont situées symétriquement par rapport au point (0) d'intersection des axes (Δi).

7. Système de localisation selon l'une quelconque des revendications précédentes, caractérisé en ce que les mires (30, 31, 32, 33) sont au nombre de quatre et sont disposées sur deux axes perpendiculaires (Δ1, Δ2).

8 Système selon l'une quelconque des revendications précédentes, caractérisé en ce que le senseur de proximétrie (19) est agence pour effectuer le balayage (26) de l'objet (21) selon au moins deux directions différentes.

9. Système de localisation selon la revendication 8, caractérisé en ce que ces deux directions de balayage sont perpendiculaires.

10. Système de localisation selon l'une quelconque des revendications précédentes, caractérisé en ce que le senseur de proximétrie (19) et agencé pour effectuer le balayage de l'objet (21) à vitesse constante.

11. Système de localisation suivant l'une quelconque des revendications précédentes, caractérisé en ce que la source (20) émet un pinceau lumineux (25) muni d'un mouvement de balayage de l'objet (21).

12. Système de localisation suivant l'une quelconque des revendications 1 à 10, caractérisé en ce que le récepteur a un angle solide (27) de réception muni d'un mouvement de balayage de l'objet (21).

13. Système de localisation selon l'une quelconque des revendications 4 à 12, caractérisé en ce que la longueur des barres (35) qui composent les mires (30, 31, 32, 33) est au moins égale à la longueur des dites mires (30, 31, 32, 33).

14. Système de localisation selon l'une quelconque des revendications 4 à 13, caractérisé en ce qu'il comprend au mions une mire supplémentaire, de même caractéristique que les mires principales (30, 31, 32, 33) située sur la face plane (34) de l'objet (21) qui est munie de ces mires principales (30, 31, 32, 33) de manière a obtenir une plus grande précision de localisation.

15. Système de localisation selon la revendication 14, caractérisé en ce la longueur des barres (35) pour chaque mire supplémentaire est plus petite que la longueur de ladite mire.

16. Système selon l'une quelconque des revendications 14 ou 15, caractérisé en ce que les mires supplémentaires sont au nombre de quatre et sont disposées sur les axes des mires ($\Delta 1$, $\Delta 2$) selon la revendication 1, mais plus rapprochées du point d'intersection (0) de ces axes ($\Delta 1$, $\Delta 2$) que ces mires.

17. Système de localisation selon la revendication 14, caractérisé en ce qu'au moins une des mire supplémentaires (42) est disposée au fond d'un puits (43).

18. Système de localisation selon la revendication 17, caractérisé en ce que ladite mire supplémentaire (42) disposée au fond d'un puits est située au croisement (0) des axes ($\Delta 1$, $\Delta 2$) des mires principales.

**Patentansprüche**

1. System zur dreidimensionalen Lagebestimmung eines Objekts, wobei das System aufweist:

einen Abstandssensor (19) zur optischen Abtastung des Objekts, der eine Quelle (20) zur Aussendung von Licht in Richtung auf dass Objekt, einen Empfänger (22) für das von diesem Objekt reflektierte Licht und ein Verarbeitungsorgan (23) enthält, das mit der Lichtquelle (20) und dem Empfänger (22) verbunden ist, und

mehrere passive Meßmarken (30, 31, 32, 33), die auf einer Fläche dieses Objekts angeordnet sind,

dadurch gekennzeichnet, daß es mindestens vier Meßmarken (30, 31, 32, 33) aufweist, die paarweise je auf Achsen ($\Delta i$) angeordnet sind, die zueinander geneigt sind und durch einen gleichen Punkt (O) verlaufen, daß jede der Meßmarken eine Reihe von optisch lesbaren Längsbalken (35) aufweist, die miteinander einen Kode bilden, und daß der Abstandssensor (19) das von den Meßmarken reflektierte Licht empfängt und die Zeit und den Winkel, gesehen vom Sensor, zwischen dem Anfang des Lesens von zwei der Meßmarken durch den Abtaststrahl mißt, um die Lage des Objekts in Bezug auf den Abstandssensor zu bestimmen.

2. System zur Lagebestimmung nach Anspruch 1, dadurch gekennzeichnet, daß die passiven Meßmarken (30, 31, 32, 33) auf einer ebenen Fläche (34) dieses Objekts (21) angeordnet sind.

3. System zur Lagebestimmung nach Anspruch 1 oder 2, dadurch gekennzeichnet, daß jede passive Meßpunkt (30, 31, 32, 33) eine Reihe von Balken aufweist.

4. System zur Lagebestimmung nach Anspruch 3, dadurch gekennzeichnet, daß jede passive Meßpunkt (30, 31, 32, 33) eine Reihe von parallelen Balken (35) aufweist.

5. System zur Lagebestimmung nach Anspruch 4, dadurch gekennzeichnet, daß die kodierten Balken (35), die die Meßmarken (30, 31, 32, 33) bilden, je senkrecht zu den Achsen ($\Delta i$) liegen, die durch diese Meßmarken (30, 31, 32, 33) verlaufen.

6. System zur Lagebestimmung nach einem beliebigen der vorhergehenden Ansprüche, dadurch gekennzeichnet, daß die Meßmarken (30, 31, 32, 33) in Bezug auf den Schnittpunkt (0) der Achsen ($\Delta i$) symmetrisch angeordnet sind.

7. Système zur Lagebestimmung nach einem beliebigen der vorhergehenden Ansprüche, dadurch gekennzeichnet, daß es vier Meßmarken (30, 31, 32, 33) gibt, die auf zwei zueinander senkrecht stehenden Achsen ($\Delta 1$, $\Delta 2$) liegen.

8. Système zur Lagebestimmung nach einem beliebigen der vorhergehenden Ansprüche, dadurch gekennzeichnet, daß der Abstandssensor (19) das Objekt (21) entlang mindestens zwei unterschiedlichen Richtungen abtastet (26).

9. System zur Lagebestimmung nach Anspruch 8, dadurch gekennzeichnet, daß die beiden Abtastrichtungen senkrecht zueinander liegen.

10. System zur Lagebestimmung nach einem beliebigen der vorhergehenden Ansprüche, dadurch gekennzeichnet, daß der Abstandssensor (19) das Objekt (21) mit gleichbleibender Geschwindigkeit abtastet.

11. System zur Lagebestimmung nach einem beliebigen der vorhergehenden Ansprüche, dadurch gekennzeichnet, daß die Quelle (20) einen schmalen Lichtstrahl (25) mit einer Abtastbuwegung über das Objekt (21) streifen läßt.

12. System zur Lagebestimmung nach einem beliebigen der Ansprüche 1 bis 10, dadurch gekennzeichnet, daß der Empfänger einen festen Empfangswinkel (27) aufweist, der mit einer Abtastbewegung das Objekt (21) überstreicht.

13. System zur Lagebestimmung nach einem beliebigen der Ansprüche 4 bis 12, dadurch gekennzeichnet, daß die Länge der Balken (35), die die Meßmarken (30, 31, 32, 33) bilden, mindestens gleich der Länge dieser Meßmarken (30, 31, 32, 33) ist.

14. System zur Lagebestimmung nach einem beliebigen der Ansprüche 4 bis 13, dadurch gekennzeichnet, daß es mindestens eine zusätzliche Meßmarke aufweist, die die gleichen Merkmale aufweist wie die Hauptmeßmarken (30, 31, 32, 33) und sich auf der ebenen Fläche (34) des Objekts (21) befindet, die mit diesen Hauptmeßmarken (30, 31, 32, 33) versehen ist, so daß sich eine größere Genauigkeit der Lagebestimmung ergibt.

15. System zur Lagebestimmung gemäß Anspruch 14, dadurch gekennzeichnet, daß die Länge der Balken (35) für jede zusätzliche Meßmarke kleiner als die Länge der Meßmarke ist.

16. System nach einem beliebigen der Ansprüche 14 oder 15, dadurch gekennzeichnet, daß es vier zusätzliche Meßmarken gibt, die sich auf den Achsen der Meßmarken ($\Delta 1$, $\Delta 2$) gemäß

Anspruch 1, aber näheram Schnittpunkt (0) dieser Achsen (Δ1, Δ2) als diese Meßmarken befinden.

17. System zur Lagebestimmung nach Anspruch 14, dadurch gekennzeichnet, daß mindestens eine der zusätzlichen Meßmarken (42) sich am Boden eines Brunnens (43) befindet.

18. System zur Lagebestimmung nach Anspruch 17, dadurch gekennzeichnet, daß die zusätzliche Meßmarke (42), die sich am Boden eines Brunnens befindet, am Schnittpunkt (0) der Achsen (Δ1, Δ2) der Hauptmeßmarken angeordnet ist.

## Claims

1. A system for locating an object according to three dimensions, said system comprising:

an approach sensor (19) conceived to scan the object optically and comprising a source (20) for emitting light towards the object, a receiver (22) for receiving light reflected from said object, and a processor member (23) connected to said light source (20) and to said receiver (22), and

several passive target patterns (30, 31, 32, 33) disposed on a surface of said object,

characterized in that it comprises at least four target patterns (30, 31, 32, 33) disposed in pairs respectively on axes (Δi) inclined with respect to each other and passing through a common intersection point (0), that each of the target patterns comprises a series of elongated signs (35) which can be read optically and are disposed to one another in such a manner as to constitute a code, and that said approach sensor (19) is capable to receive the light reflected by the target patterns and to measure the time and the angle seen from the sensor between the starts of reading of two of the patterns by the scanning pencil in order to locate the object with respect to the approach sensor.

2. A locating system according to Claim 1, characterized in that the passive target patterns (30, 31, 32, 33) are situated on a plane surface (34) of this object (21).

3. A locating system according to Claim 1 or 2, characterized in that each passive target pattern (30, 31, 32, 33) comprises a series of lines.

4. A locating system according to Claim 3, characterized in that each passive target pattern (30, 31, 32, 33) comprises a series of parallel bars (35).

5. A locating system according to Claim 4, characterized in that the code bars (35) constituting the target patterns (30, 31, 32, 33) extend perpendicularly to the axes (Δi) which pass through these patterns (30, 31, 32, 33).

6. A locating system according to any one of the preceding Claims, characterized in that the target patterns (30, 31, 32, 33) are situated symmetrically with respect to the point of intersection (0) of the axes (Δi).

7. A locating system according to any one of the preceding Claims, characterized in that the target patterns (30, 31, 32, 33) are four in number and are disposed on two perpendicular axes (Δ1, Δ2).

8. A locating system according to any one of the preceding Claims, characterized in that the approach sensor (19) is capable of scanning (26) the object (21) along at least two different directions.

9. A locating system according to Claim 8, characterized in that these two scan directions are mutually perpendicular.

10. A locating system according to any one of the preceding Claims, characterized in that the approach sensor (19) is capable of scanning the objet (21) at constant speed.

11. A locating system according to any one of the preceding Claims, characterized in that the source (20) emits a pencil beam (25) which scans the object (21).

12. A locating system according to any one of Claims 1 to 10, characterized in that the receiver has a solid reception angle (27) which scans the objet (21).

13. A locating system according to any one of Claims 4 to 12, characterized in that the bars (35) which constitute the target patterns (30, 31, 32, 33) are at least as long as said patterns (30, 31, 32, 33).

14. A locating system according to any one of Claims 4 to 13, characterized in that it comprises at least one additional pattern having the same characteristics as the main patterns (30, 31, 32, 33) and being situated on the plane face (34) of the object (21) on which said main patterns (30, 31, 32, 33) are situated, in such a manner as to obtain greater locating accuracy.

15. A locating system according to Claim 14, characterized in that the bars (35) of each additional pattern are shorter than the length of said pattern.

16. A locating system according to any one of Claims 14 or 15, characterized in that there are four additional patterns disposed on the axes of the patterns (Δ1, Δ2) according to Claim 1, but closer to the point of intersection (0) of these axes (Δ1, Δ2) than said patterns.

17. A locating system according to Claim 14, characterized in that at least one of the additional patterns (42) is disposed at the bottom of a well (43).

18. A locating system according to Claim 17, characterized in that said additional pattern (42) located at the bottom of a well is situated at the intersection (0) of the axes (Δ1, Δ2) of the main patterns.

# FIG.1

FIG. 2

# FIG.3

# FIG.4

# FIG.5

# FIG.6

# FIG.7